Europäisches Patentamt

**European Patent Office**

Office européen des brevets

(11) Veröffentlichungsnummer: **0 128 525**
**B1**

(12) **EUROPÄISCHE PATENTSCHRIFT**

(45) Veröffentlichungstag der Patentschrifft:
**17.01.90**

(21) Anmeldenummer: **84106465.2**

(22) Anmeldetag: **06.06.84**

(51) Int. Cl.⁴: **B 65 D 35/46**

(54) **Auslaufsperre für Behälter, insbesondere für Tuben, und Anwendungen.**

(30) Priorität: **07.06.83 DE 3320482**
**14.07.83 DE 3327852**
**27.07.83 DE 3327853**
**25.01.84 DE 3402478**

(43) Veröffentlichungstag der Anmeldung:
**19.12.84 Patentblatt 84/51**

(45) Bekanntmachung des Hinweises auf die Patenterteilung:
**17.01.90 Patentblatt 90/03**

㊹ Bennante Vertragsstaaten:
**AT BE CH DE FR GB IT LI LU NL SE**

(56) Entgegenhaltungen:
**DE-A-2 128 875**
**FR-A-2 508 008**
**US-A-3 669 323**
**US-A-3 674 183**
**US-A-4 133 457**

(73) Patentinhaber: **Lingner + Fischer GmbH**
**Postfach 1440 Hermannstrasse 7**
**D-7580 Bühl (Baden) (DE)**

(72) Erfinder: **Flier, Gustav, Dipl.-Phys.**
**Kloster-Lorsch-Weg 22**
**D-7407 Rottenburg 15 (DE)**

(74) Vertreter: **Dayneswood, Trevor**
**Beecham Pharmaceuticals Patent and Trade Mark Department Biosciences Research Centre Great Burgh Yew Tree Bottom Road**
**Epsom Surrey KT18 5XQ (GB)**

LIBERGRAF, STOCKHOLM 1990

## Beschreibung

Die Erfindung bezieht sich auf eine Auslaufsperre für Behälter, insbesondere für Tuben, wie im Oberbegriff des Anspruch 1 angegeben ist, und auf Anwendungen.

Eine solche Auslaufsperre dient vornehmlich dazu, bei dem Entnehmen von Füllgut aus einer Entnahmeöffnung des Behälters einem Nachfließen des Füllgutes vorzubeugen. Es werden also insbesondere solche Behälter in Betracht gezogen, bei denen das Füllgut fließfähig oder sonst auslauffähig ist. Derartige Füllgüter können beispielsweise flüssig oder halbflüssig sein; es kann sich aber beispielsweise auch um fließfähige Pulver und andere Füllgüter mit vergleichbaren Eigenschaften handeln. Vorzugsweise erfolgt Anwendung für dünnflüssige Füllgüter, z. B. Klebstoff, Zahncreme oder Shampoon. Bei Abfüllen flüssiger oder halbflüssiger Produkte in Tuben ist es z. B. durch den Abfüll- und den anschließenden Verschließvorgang meist unvermeidlich, daß eine kleine Luftblase mit eingeschlossen wird. Wenn der Tubeninhalt ein Lösungsmittel enthält, kommt es zur Ausgasung von Lösungsmitteldampf in die Luftblase. Allgemein kann sich eine Luft-, Gas- und/oder Dampfblase aufbauen, deren Druck der Summe aller Partialdrücke aller flüchtigen Gas- und Dampfbestandteile innerhalb der Tube entspricht. Dieser Druck läßt schon beim Öffnen der Tube Tubeninhalt ungewollt ausfließen und dann lästig nachfließen. Handwärme beim Gebrauch der Tube sowie eine warme Lagertemperatur unterstützen diese Vorgänge. Es kann aber auch aus anderen Gründen zu einem Auslaufen kommen, und sei es nur unter der Schwerkraft.

Einem solchen Auslaufen kann man entgegenwirken, wenn man den Behälterraum in eine mit einer Entnahmeöffnung des Behälters kommunizierende Vorkammer und eine eigentliche Vorratskammer durch eine Zwischenwand unterteilt, die nach der Füllgutentnahme ein Nachlaufen des Füllguts aus der Vorratskammer in die Vorkammer entweder ganz sperrt oder wenigstens drosselt. In einem Grenzfall kann man dabei die Vorkammer sogar als Dosierkammer für durch die Vorkammer quantitativ abgemessenes Füllgut verwenden. Der mit der Erfindung jedoch überwiegend angesprochene Fall ist der, daß die Entnahme des Füllgutes von Stärke und Dauer eines auf das in der Vorratskammer befindliche Füllgut ausgeübten Entnahmedruckes abhängt und sich dabei eine kontinuierliche Füllgutsäule von der Vorratskammer über die Vorkammer bis in die Entnahmeöffnung erstreckt. Bei Aufhebung des Betätigungsdruckes hemmt oder verhindert dann die in der Zwischenwand vorgesehene Verbindungseinrichtung zwischen Vorratskammer und Vorkammer einen Nachtransport von Füllgut aus der Vorratskammer in die Vorkammer zur Entnahmeöffnung.

Als Behälter kommen vorzugsweise die schon beispielhaft genannten Tuben in Frage, bei denen die Füllgutentnahme durch Druck auf den Tubenkörper erfolgt. Neben den vor allem angesprochenen üblichen Quetschtuben kommen dabei auch solche Tuben in Frage, bei denen sich der Tubenkörper nach Druckausübung mehr oder minder elastisch wieder in eine Grundform zurückstellt. Es kommen aber auch andere gleichwirkende Behälter in Frage, z. B. solche, bei denen auf die Vorratskammer ein Betätigungsdruck über einen Betätigungskolben, eine Betätigungspneumatik oder vergleichbare Druck ausübende Betätigungsmittel ausgeübt wird.

Wenn die Vorkammer nicht wie in dem genannten Grenzfall als Dosierkammer verwendet wird, sondern wenn im Sinne des Hauptzwecks von Einrichtungen der hier beschriebenen Art in erster Linie einem Auslaufen oder Nachfließen von Füllgut entgegengewirkt wird, welches sich in einer mehr oder minder geschlossenen Säule von der Behälteröffnung durch die Vorkammer in die Vorratskammer erstreckt, hat eine solche hemmende oder gänzlich sperrende Auslaufsperre immer noch den Charakter einer Dosierhilfe.

Im Rahmen der Erfindung kann die Behälteröffnung in einem Grenzfall ständig offen sein, wenn dies während der Gebrauchszeit des Behälters zu keiner wesentlichen Füllgutverschlechterung führt. Meist wird die Behälteröffnung mit einem lösbaren und zweckmäßigerweise wiederverwendbaren Verschluß, z. B. bei Tuben mit einer üblichen Tubenkappe, versehen sein. In einem anderen weniger bevorzugten, jedoch auch möglichen Grenzfall kann die Behälteröffnung mit einem selbsttätigen Behälterverschluß, z. B. einem druckbetätigten Verschluß für Tuben und elastische Behälter gemäß DE-A-2 704 164 oder einem Tubenverschluß gemäß DE-A-2 341 934, versehen sein. Es gibt eine Vielzahl anderer selbsttätiger Tubenverschlüsse. Derartige selbsttätige Tubenverschlüsse, welche die eigentliche Behälteröffnung bei Nichtgebrauch des Behälters verschließen, sind nicht Gegenstand der Erfindung.

Gegenstand der Erfindung ist vielmehr die Ausbildung und Anordnung der Zwischenwand, welche die mit einer Entnahmeöffnung des Behälters versehene Vorkammer von einer Vorratskammer unterteilt, in ihrer Funktion als teilweise oder völlige Auslaufsperre. Der Entnahmedruck pflanzt sich dabei, meist über das Füllgut selbst, von der Vorratskammer über die Zwischenwand auf das in der Vorkammer befindliche Füllgut fort.

Insbesondere bei Verwendung eines selbsttätigen Tubenverschlusses, aber auch sonst, ist es dabei an sich bekannt (vgl. z. B. DE-U-1 924 355 und DE-U-7 223 144 sowie GB-A-724 798), in der Zwischenwand ständig offene Drosselöffnungen vorzusehen. Hierbei besteht jedoch ein Zielkonflikt zwischen einem möglichst ungehinderten Durchgang von der Vorratskammer zur Vorkammer bei der Entnahme und einer möglichst starken Drosselung während der Zeiten, in denen keine Entnahme erfolgt.

Dieser Zielkonflikt tritt nicht mehr auf, wenn die Zwischenwand mit einer Ventileinrichtung, insbesondere einer Einwegventileinrichtung von Vorratskammer zu Vorkammer, versehen ist, welche bei Druckbeaufschlagung auf das Füllgut in der Vorkammer einen hinreichend großen Durchlaßquerschnitt öffnet und bei Aufhebung des Entnahmedrucks vorzugsweise ganz oder wenigstens doch partiell wieder schließt. Die Erfindung befaßt sich mit der Problematik derartiger als Auslaufsperre wirkender Zwischenwände mit Ventileinrichtung. Es ist dabei nicht ausgeschlossen, daß in der Zwischenwand zusätzlich zur Ventileinrichtung noch ein ständig freier Öffnungsquerschnitt verbleibt, um dabei z. B. einen Druckausgleich unterschiedlicher Partialdrücke in Vorratskammer und Vorkammer, z. B. unterschiedlicher Lösungsmitteldampfdrücke, zu ermöglichen. Ein derartiger zusätzlicher Öffnungsquerschnitt ist dann jedoch zweckmäßig stark drosselnd ausgebildet Ventileinrichtungen einer Zwischenwand können grundsätzlich jeden funktionell in Frage kommenden bekannten Ventilaufbau haben. Die Erfindung befaßt sich dabei mit dem Sonderfall, daß eine mehr oder minder elastische selbsttätige Rückstellkraft des Ventilorgans vom Spannungszustand eines Membranabschnittes abhängt, der Bestandteil der Zwischenwand ist. Derartige bekannte Konstruktionen zerfallen in zwei Klassen. Bei der einen Klasse (US-A-3 081 006 = DE-B-1 212 862, US-A-3 179 299 und DE-C-1 786 644) ist die Zwischenwand integraler Bestandteil des Behälterkörpers. Bei der anderen Klasse (das schon erwähnte DE-U-8 230 181 sowie DE-U-7 241 840, US-A-1 122 868 und FR-A-1 519 814) ist die Zwischenwand ein nachträglich in den Behälterkörper eingebrachtes Einsatzstück. Die Erfindung befaßt sich vornehmlich, jedoch nicht ausschließlich, mit der Ausbildung der Zwischenwand als Einsatzstück. Dieses Einsatzstück kann mit dem Behälter durch lose Anlage verbunden sein, z. B. unter dem Druck des Füllgutes der Vorratskammer in Anlage an eine Behälterschulter. Bevorzugter sind jedoch dauerhaftere Verbindungen, z. B. durch Einklemmen unter Vorspannung oder gar durch dauerhafteres Verbinden, etwa mittels eines Klebemittels. Von besonderem Interesse ist dabei die Möglichkeit der Einklemmung unter Vorspannung, ohne dabei die anderen Verbindungsarten ausschließen zu wollen.

Es gibt eine Vielzahl von Anordnungen und Formen in Frage kommender Ventilöffnungen des Membranabschnittes der Zwischenwand. Nach der US-A-3 179 299 kann der Membranabschnitt eine Mehrzahl von kleinen Durchgangsöffnungen aufweisen, die sich bei Druck von seiten der Vorratskammer aufweiten, wobei die Zwischenwand als Rücksaugsperre für Luft aus der Vorkammer in die Vorratskammer dient. Es kann der ganze Membranabschnitt als Klappenventil dienen (DE-C-1 786 644). Es kann der Membranabschnitt mit einem gesonderten, z. B. klappenartigen, Ventilorgan zusammenwirken (US-A-3 081 006 = DE-B-1 212 862). Das Interesse der Erfindung richtet sich auf solche Ventilöffnungen, welche einfach durch Schlitzung des Membranabschnittes gewonnen werden.

Die bekannten Anordnungen von Ventilschlitzen zerfallen dabei wiederum in zwei Klassen. Bei der ersten Klasse sind die Ventilschlitze zentral in der Zwischenwand angeordnet, z. B. als Einfachschlitz, Y-Schlitz, Kreuzschlitz, Winkelschlitz oder nur über einen kurzen Umfangsbereich unterbrochener Kreisschlitz (DE-U-7 241 840 und 8 230 181 sowie FR-A-1 519 814 und US-A-1 122 868, Fig. 1 bis 4). Bei der zweiten Klasse sind die Ventilschlitze zentrumsfern nahe des Umfangs des Membranabschnittes (im folgenden "peripher" genannt) angeordnet, z. B. fast halbkreisförmig jeweils zur Bildung eines Ventillappens (gemäß US-A-1 122 868, Fig. 5). Die Erfindung befaßt sich mit dieser zweitgenannten Klasse.

Nun erweist es sich, daß, insbesondere bei der Massenfertigung mit ihrer hohen Produktionsgeschwindigkeit, einerseits solche Einsatzstücke, welche die Zwischenwand mit ihrem Membranabschnitt bilden, und andererseits die Behälter mit erheblichen Toleranzen vorliegen.

So ist die Erfindung unter anderem besonders vorgesehen für Aluminiumtuben, die heutzutage in Produktionsgeschwindigkeiten von 100 bis 180 Tuben pro Minute hergestellt werden. Aluminiumtuben werden heutzutage durch Fließpressen hergestellt, wobei Toleranzen beispielsweise durch Verschleiß in den Werkzeugen entstehen. Die den Membranabschnitt aufweisenden Einsatzstücke werden zweckmäßig aus Kunststoff, vorzugsweise einer gegen Lösungsmittel, z. B. von Klebstoffen, unempfindlichen Art, wie Polypropylen oder einem anderen vergleichbaren Kunststoff, hergestellt. Hierbei kommt es zu Herstellungstoleranzen sowohl vom Spritzwerkzeug her wie von der Materialseite. Da die Verbindung von Zwischenwand und Behälter ganz oder überwiegend dicht sein soll, kommt es dabei leicht zu unerwünschten Rückwirkungen der Verbindungsbedingungen von Zwischenwand und Behälter auf die Ventilöffnung. So kann ein auf der Zwischenwand ausgebildeter Halteteil, der, beispielsweise klemmend, zur Verbindung mit dem Behälter dient, unerwünschte Spannungen auf den mit der Ventilöffnung oder den Ventilöffnungen versehenen Membranbereich ausüben und so die Ventilfunktion in unerwünschter Weise beeinflussen. Vergleichbares gilt selbst dann, wenn die Zwischenwand integral mit dem Behälter ausgebildet ist, da sich auch dann Toleranzen des Behälters im Großen unerwünscht auf die möglichst genau einzustellende Ventilöffnung im Membranabschnitt der Zwischenwand auswirken können.

Die Erfindung geht von einem Stand der Technik gemäß dem Ausführungsbeispiel der Fig. 8 und 9 der US-A-4 133 457 aus. Diese zeigt eine als Flüssigkeitsspender dienende Flasche aus flexiblem, nachgiebigem Material. Die Zwischenwand zwischen Vorkammer und Vorratskammer ist von einem einstückigen Einsatzteil gebildet, welches mit einem äußeren flachen Ringflansch zwischen einer flachen Schulter eines auf den Behälter aufschraubbaren Mundstücks des Behälters und dessen stirnseitig offener Stirnfläche eingespannt wird. Der Ringflansch bildet dabei ein Halteteil, das unter Ausgleich von Toleranzen mit dem Behälter verbindbar ist. In den von dem Halteteil umgebenen zentralen Bereich des Einsatzteils ragt eine konisch zulaufende Fassung, die mit der Flaschenachse koaxial angeordnet ist, in den Vorratsraum und spannt einen somit vom Halteteil getragenen Membranabschnitt auf, in welchem sich zwei Schlitze axial versetzt kreuzen. Der eine im axialen Bereich liegende spitzwinklige Abschnitt des Membranabschnitts zwischen den beiden sich kreuzenden Schlitzen dient dabei als klappenartig ausbiegbarer dreieckiger Ventillappen. Dabei wird eine bei Druckentlastung auf das Füllgut wirksame Auslaufsperre der erörterten Art geschaffen, welche in einer für Massenfertigung geeigneten Weise die Spannungsbedingungen ihrer Ventilöffnung im Membranabschnitt von den Bedingungen der Verbindung der Zwischenwand mit dem Behälter entkoppelt. Dabei wird auch der Membranabschnitt von der Fassung ohne wirksamen Einfluß von Spannungseinflüssen aus Toleranzen des Behälterkörpers so gehalten, daß die Ventilöffnung im ungespannten Zustand, bei dem das Füllgut druckentlastet ist, optimal geschlossen ist. In Ausnahmefällen kann man auch daran denken, für die Ventilfunktion besonders gewünschte Spannungsbedingungen in den Membranabschnitt einzuprägen, wobei dann diese Spannungsbedingungen von den Bedingungen der Verbindung von Zwischenwand und Behälter möglichst unberührt sein sollen.

Bei der gattungsgemäßen Auslaufsperre sorgt somit die relativ zum Membranabschnitt und zweckmäßig auch relativ zum Halteteil der Zwischenwand relativ formsteife Fassung des Membranabschnittes dafür, daß dieser den gewünschten Spannungszustand, vorzugsweise die Spannungslosigkeit, unabhängig davon gewährleistet, wie die Bedingungen der Verbindung von Zwischenwand und Behälter sind. An diese Verbindungsbedingungen paßt sich der Halteteil an, welcher die Fassung trägt. Dabei kompensiert die formsteife Fassung zumindest teilweise auch die Rückwirkung von Klemmspannungen, die beim Einspannen des als Halteteil dienenden Ringflansches entstehen, etwa durch Kompression des Ringflanschmaterials, und sich radial nach innen fortpflanzen.

Um die gleichmäßigen Spannungsbedingungen des Membranabschnittes nutzbar zu machen, kann an sich die Ventilöffnung oder eine Mehrzahl von Ventilöffnungen in beliebig bekannter Weise ausgebildet und angeordnet sein. Die bei der gattungsgemäßen US-A-4 133 457 gewählte Ventilausbildung ist dabei insofern ungünstig, als sie auf die Ausbiegbarkeit eines Lappens des Membranabschnittes abstellt. Das kann relativ früh zu Materialermüdung und unbefriedigender Schließfunktion führen und setzt für eine ausreichende Rückstellkraft eine relativ große Membranwandstärke voraus. Die Erfindung befaßt sich stattdessen mit einer Anordnung peripherer Ventilschlitze. Bisher (vgl. FR-A-2 508 008, Fig. 15) hat man dabei lediglich ein Paar sich gegenüberliegender peripherer Ventilschlitze so als Kreisabschnitte mit einer Erstreckung um weniger als 180° ausgebildet, daß ein kreissegmentförmiger Lappen um die Verbindungslinie der Enden des jeweiligen Kreisabschnittes ausklappen kann. Auch diese Klappenfunktion macht eine relativ dickwandige Ausbildung der radial weiter innen liegenden Bereiche des Membranabschnittes erforderlich, wenn man nennenswerte Rückstellkräfte erzeugen will. Es ist dabei auch als nachteilig anzusehen, daß die Scharnierlinie der Klappe im an sich eher elastischen radial inneren Bereich des Membranabschnittes liegt. Überhaupt ist die Dauerbelastbarkeit einer derartigen Membranklappe beschränkt.

Der Erfindung liegt demgegenüber die Aufgabe zugrunde, bei einer gattungsgemäßen Auslaufsperre, bei der die Einspannbedingungen des Membranabschnitts von den Einsetzbedingungen des Einsatzteils im Behälter durch die den Membranabschnitt umgebende Fassung entkoppelt sind, die Schließfunktion und Dauerbelastbarkeit der Ventilfunktion des Membranabschnitts zu verbessern.

Hierzu wird nach der Erfindung vorgesehen, daß mehrere periphere Ventilschlitze längs der Fassung verlaufen und daß der Membranabschnitt zu seinem Zentrum hin verstärkt ausgebildet ist. Der Verlauf der Ventilschlitze längs der Fassung stellt sicher, daß der der Fassung benachbarte Bereich des jeweiligen Ventilschlitzes mehr oder minder ortsfest gehalten ist, während sich der radial weiter innen liegende Rand des Ventilschlitzes unter Materialverformung der nicht geschlitzten Randzone des Membranabschnittes nach Art eines Ventilschiebers, dessen Funktion durch die Verstärkung des Membranabschnitts zu seinem Zentrum hin gewährleistet werden kann, etwa in Achsrichtung der Fassung verschieben kann.

In bestimmten Fällen kann es ausreichen, wenn die Fassung den membranförmigen Abschnitt der Zwischenwand nicht vollständig umfaßt. Vorzugsweise ist die Fassung jedoch ringförmig ausgebildet. Mit "ringförmig" ist dabei in erster Linie eine ringsum verlaufende Fassung ohne Beschränkung auf eine bestimmte Form angesprochen, in zweiter, bevorzugter, Linie eine kreisringförmige Form. Bewährt hat sich die Ausbildung als Zylinder oder eine andere in Achsrichtung der Fassung langgestreckte Form. Hierdurch läßt sich besonders gut in demselben Material der Zwischenwand, welches den mehr oder minder elastisch-nachgiebigen Membranabschnitt bildet, die Formsteifigkeit der Fassung gewährleisten. Überhaupt ist vorzugsweise vorgesehen, daß alle Elemente der Zwischenwand einstückig aus demselben Material, wie bereits dem genannten Polypropylen, gebildet sind.

Man könnte daran denken, den Membranabschnitt in einem mittleren Bereich der Länge einer solchen langgestreckten Fassung anzubringen, z. B. im Zentrum auf halber Länge. Eine solche Anordnung kann bei geringer Wandstärke der Fassung zum Gewährleisten einer maximalen Formsteifigkeit nützlich sein. Aus Gründen vereinfachter Massenfertigung und anderen Gründen ist es jedoch bevorzugt, daß der Membranabschnitt an einer Stirnseite der langgestreckt ausgebildeten Fassung angeordnet ist. Zu den anderen Gründen kann auch die dabei besonders günstige elastische Ausspannung des Membranabschnittes gerechnet werden, da hier der Membranabschnitt nach Art einer Trommelbespannung aufgespannt ist. Obwohl dabei die Fassung über längere Zeiträume betrachtet formstabil ist, kann sie zugleich noch so viel Elastizität haben, daß sie die elastischen Eigenschaften des Membranabschnittes mit bestimmt.

Wenn, wie bei Ausbildung der Zwischenwand als Einsatzstück weit verbreitet, die Zwischenwand an einer Behälterschulter angeordnet ist (vgl. z. B. auch US-A-1 122 868 oder DE-U-8 230 181), ist zweckmäßig die mit dem Membranabschnitt versehene Stirnseite einer langgestreckt ausgebildeten Fassung der Behälterschulter abgewandt.

Als Halteteil kann jedes die Fassung tragende und an der Zwischenwand ausgebildete Teil dienen, welches in dem von der Zwischenwand eingenommenen Behälterinnenquerschnitt auftretende Toleranzen sowie für den Fall, daß die Zwischenwand als Einsatzstück ausgebildet ist, auch Toleranzen des Einsatzstückes ausgleicht. Im Grenzfall kann dabei das Halteteil sogar Element der Fassung sein, sofern diese sowohl die Einspannfunktion als auch die Toleranzen ausgleichende Haltefunktion zu erfüllen in der Lage ist. Im Normalfall wird das Halteteil ein gesondertes Element sein.

Zum Beispiel für klemmende Ausbildung des Halteteils an einer als Einsatzstück dienenden Zwischenwand ist das Halteteil zweckmäßig als Ringkragen ausgebildet. Dieser kann zweckmäßig eine Ringscheibe mit einem abgewinkelten Halteflansch sein. Für den bereits erwähnten häufigen Fall, daß dabei das Einsatzstück an einer Behälterschulter abgestützt ist und diese Behälterschulter nach Art einer Tubenschulter schräg ausgebildet ist, ist dann vorzugsweise vorgesehen, daß auch die Ringscheibe in Anpassung an die schräge Behälterschulter schräg ausgebildet ist. Um allgemein das Halteteil eng an der Behälterschulter anbringen zu können, ist zweckmäßig ferner vorgesehen, daß der Halteflansch von der betreffenden Behälterschulter fortweist. Wenn man schließlich die Elemente des Halteteils relativ wandstark ausbilden will, trotzdem jedoch eine elastische Anpassung an unter Toleranzen bedingte unterschiedliche Innenquerschnitte des Behälters sicherstellen möchte, sieht man zweckmäßig in dem Halteteil eine entsprechende elastisch-nachgiebige Ringzone vor. Diese kann durch Materialschwächung in einem elastisch-nachgiebigen Grundmaterial der Zwischenwand gewonnen sein. Eine bevorzugte Ausführungsform ist dabei die, daß die innere Übergangsfläche der Ringscheibe in den Halteflansch unter Bildung einer ringförmigen geschwächten Zone von radial innen nach radial außen geknickt verläuft.

Wenn bei dem Membranabschnitt ein Radius definiert werden kann, was bei üblichen runden oder ovalen oder ähnlichen Konfigurationen der Fall ist, verlaufen die jeweiligen Ventilschlitze zweckmäßig rechtwinklig zum Radius des Membranabschnittes. Daraus folgt dann auch für den erfindungsgemäßen Fall, bei dem sich mehrere Ventilschlitze längs der Fassung erstrecken, daß auch die Fassung ganz oder im wesentlichen rechtwinklig zum Radius verläuft.

Hiermit werden nicht nur die Nachteile der bekannten ventilklappenartigen Schlitzkonfigurationen vermieden, sondern auch die Nachteile von radialen Ventilschlitzen. Versuche mit radial geschlitzten Ventilmembranen aus elastischem Material, die randdicht in Tuben vor deren jeweiligem Tubenkonus liegen, zeigen nämlich, daß solche Ventilmembranen nur relativ unzureichend ein Dosieren ermöglichen und ein Nachfließen unterbinden. Der Grund liegt in weniger genügendem Rückfederungsverhalten solcher Art gestalteter Ventilmembranen, insbesondere wenn man die Zwischenwände herstellt als kostengünstige Spritzteile aus einem lösungsmittelbeständigen Kunststoff wie z. B. aus Polypropylen für Klebstoffe. Bei einer erfindungsgemäßen Konfiguration mit peripheren, rechtwinklig zum Radius verlaufenden Ventilschlitzen längs der Fassung wird demgegenüber das zur exakten Dosierung und zur Unterbindung eines Nachfließens notwendige aufzubringende Rückfederungsverhalten durch die Fassung als Träger des Membranabschnittes aufgebracht, um ein schnelles Öffnen und Schließen der Ventilschlitze sicherzustellen. Im Gegensatz zu radial geschlitzten Membranen, die gleichzeitig auch eine ähnliche Funktion wie Ventilklappen übernehmen, übernimmt die bis zu ihrer Peripherie geschlossene und zur Mitte hin verstärkte Gegendruckmembran im Rahmen der Erfindung die Funktion eines Ventilschiebers, der exakt bei einem bestimmten Gegendruck die Ventilschlitze leicht öffnen läßt und diese bei Nachlassen des Druckes sofort wieder schließen läßt. Dabei trägt die Fassung dazu bei, daß die Vorgänge des Schließens und Öffnens weitgehend unabhängig sind von einer Vorspannung zwischen einem z. B. als Tubeneinsatzhaltekragen ausgebildeten Halteteil und dem Behälter, hier der Tube. Eine solche Vorspannung des Halteteils ist bei Ausbildung der Zwischenwand als Tubeneinsatz in der Tube für eine sichere Halterung bei Transport und Lagerung erforderlich, ohne daß eine derartige Vorspannung im allgemeinen im Bereich der Ventilöffnungen, hier der speziell geformten und angeordneten Ventilschlitze, erwünscht ist.

Um einen solchen Tubeneinsatz ohne Beschädigung der Tube in diese einzubringen, erfolgt das Einführen des Tubeneinsatzes zweckmäßig in einer Schräglage zur Tubendurchmesserebene, und der Tubeneinsatz wird erst an der Behälterschulter des vorderen Tubenkonus eben an diesen dicht fest angedrückt.

Der zu seinem Zentrum zu verstärkt ausgebildete Membranabschnitt kann jeweils eine gegen den Ventilschlitz auslaufende Versteifungsrippe bilden, die zweckmäßig radial verläuft. Entsprechendes gilt für mehrere Versteifungsrippen. Dabei kann man auch eine zum Zentrum hin zunehmende Verstärkung an der Versteifungsrippe oder den Versteifungsrippen ausbilden. Für die Steuerung der Ventilschlitze ist es dabei zweckmäßig, wenn die Versteifungsrippe bzw. die Versteifungsrippen und/oder eine sonstige Verstärkung des zentralen Bereichs des Membranabschnittes auf der der Vorratskammer abgewandten Seite ausgebildet sind.

Die erwähnte Ventilschieberwirkung tritt bereits in einem merklichen Umfang auf, wenn die peripheren Ventilschlitze, die längs der Fassung und zweckmäßig radial zum Membranabschnitt verlaufen, noch etwas Abstand zur Fassung haben. Denn auch dann bewegen sich die innen liegenden Bereiche des Membranabschnitts ventilschieberartig weiter in Achsrichtung des Membranabschnittes als die von der Fassung festgehaltenen peripheren Restabschnitte. Eine optimale Ventilschieberwirkung erhält man dabei, wenn mehrere derartige periphere Schlitze gleichmäßig längs der Fassung verteilt sind.

Diese Wirkung kann man noch verstärken, wenn der Außenrand des betreffenden Ventilschlitzes oder der entsprechenden Ventilschlitze am Innenrand der Fassung angeordnet ist, da dann der Außenrand des betreffenden Ventilschlitzes sich nicht mehr axial gegenüber der Fassung ausbiegt und somit die Ventilschieberwirkung des mit dem Innenrand des betreffenden Ventilschlitzes verbundenen Bereichs des Membranabschnittes optimal wird.

Die Öffnungssteuerung des Ventilschlitzes kann dabei noch verbessert werden, wenn die Schnittfläche des Ventilschlitzes oder der betreffenden Ventilschlitze schräg zur Achse der Fassung verläuft. Der Verformungskinematik entspricht es dabei am besten, wenn die Schnittfläche einen Neigungswinkel in Richtung Tubeneinsatzmitte besitzt und dabei der jeweilige Ventilschlitz an der der Vorkammer zugewandten Seite des Membranabschnittes achsferner als an der der Vorratskammer zugewandten Seite des Membranabschnittes angeordnet ist.

Die Erfindung wird im folgenden anhand schematischer Zeichnungen an mehreren Ausführungsbeispielen noch näher erläutert. Es zeigen:

Fig. 1 einen die Tubenachse enthaltenden Querschnitt durch den vorderen Teil einer abgebrochen dargestellten Tube mit eingebauter Auslaufsperre;

Fig. 2 eine Draufsicht auf eine Auslaufsperre von vorne, insbesondere für die Anordnung nach Fig. 1;

Fig. 3A einen in der Schnittführung Fig. 1 entsprechenden Querschnitt durch eine abgewandelte Auslaufsperre;

Fig. 3B eine Draufsicht von vorne auf eine gegenüber Fig. 2 veränderte Auslaufsperre, insbesondere gemäß Fig. 3A;

Fig. 4A einen in der Schnittführung Fig. 1 entsprechenden Querschnitt durch eine weitere Auslaufsperre;

Fig. 4B eine Draufsicht von vorne auf eine gegenüber Fig. 2 und Fig. 3B abgewandelte Auslaufsperre, insbesondere mit Grundaufbau gemäß Fig. 4A;

Fig. 5 einen der Schnittführung von Fig. 1 entsprechenden Querschnitt in vergrößertem Maßstab durch eine Auslaufsperre unter Fortlassung der Ventilöffnung(en), insbesondere gemäß Fig. 3A oder Fig. 4A;

Fig. 6 einen in der Schnittführung Fig. 1 entsprechenden Querschnitt durch den abgebrochen dargestellten vorderen Teil einer Tube mit noch einer anderen Art einer eingebauten Auslaufsperre; und

Fig. 7 den Querschnitt der Auslaufsperre gemäß Fig. 6 in vergrößertem Maßstab.

Als Behälter ist bei allen Ausführungsbeispielen ohne Beschränkung der Allgemeinheit eine Tube 6, insbesondere Quetschtube, dargestellt. Es handelt sich dabei insbesondere um eine Aluminiumtube. Diese hat einen im ungequetschten Zustand zylindrischen Hauptkörper 14, der aber auch in abgewandelter, nicht dargestellter Weise von vornherein abgeflacht ausgebildet sein kann. Der Hauptkörper 14 ist an seinem Ende in bekannter Weise, beispielsweise durch einen Verschlußfalz, verschließbar, was nicht im einzelnen dargestellt ist. An seinem vorderen Ende geht der Hauptkörper 14 über ein konisches Übergangsstück 16 in einen mit der Achse 18 des Hauptkörpers 14 koaxialen Nippel 20 über, der sich tüllenartig leicht verjüngt und an seinem vorderen Ende die Entnahmeöffnung 22 des Behälters aufweist. Die Entnahmeöffnung 22 kann in nicht dargestellter bekannter Weise durch ein eigenes Verschlußorgan verschließbar sein, insbesondere durch eine auf den Nippel 20 aufsteckbare oder aufschraubbare Verschlußhülse. Das konische Übergangsstück 16 ist auch koaxial mit der Achse 18, die somit zugleich die Behälterachse ist, und bildet im vorderen Anschluß an den Hauptkörper 14 eine diesen bis auf den Übergang in den Nippel 20 vorne abschließende Behälterschulter 7, welche mit dem Querschnitt des Hauptkörpers 14 an dessen vorderer Stirnseite einen spitzen Winkel von z. B. 27° einschließt.

Im Bereich dieses stirnseitigen Querschnitts des Hauptkörpers 14 und damit auch in Anlage am Ansatzpunkt der Behälterschulter 7 an den Hauptkörper 14 ist eine Zwischenwand 1 in Gestalt eines aus einem lösungsmittelunempfindlichen Material wie Polypropylen bestehenden Einsatzteils von hinten her in den Hauptkörper bis in Anlage an den Ansatz der Behälterschulter 7 eingeschoben. Die Zwischenwand 1 unterteilt den Behälterraum in eine Vorratskammer 24, welche im wesentlichen dem Innenraum des Hauptkörpers 14 entspricht, und in eine Vorkammer 26, die hinten von der Zwischenwand 1 und vorne von der Entnahmeöffnung 22 begrenzt ist.

Um den die Zwischenwand 1 bildenden Tubeneinsatz ohne Beschädigung der Tube 6 in dieser einzubringen, erfolgt das Einführen des Tubeneinsatzes in den hinten noch geöffneten Hauptkörper 14 in einer Schräglage zur jeweiligen Tubendurchmesserebene. Der Tubeneinsatz wird erst am konischen Übergangsstück 16 eben an den Übergang des Hauptkörpers 14 in die vom konischen Übergangsstück 16 gebildete Behälterschulter 7 angedrückt und in der dabei erfolgenden ebenen Ausrichtung mit der stirnseitigen Querschnittsfläche des Hauptkörpers 14 dichtfest mit der Tube 6 verbunden.

Die Zwischenwand 1 weist Ventilschlitze 4 auf, die sich bei Druckbeaufschlagung der Zwischenwand 1 von seiten der Vorratskammer öffnen und sich bei Druckentlastung selbsttätig wieder schließen. Dieser Steuerdruck auf die Ventilschlitze 4 wird von dem in der Vorratskammer 24 enthaltenen fluiden Füllgut ausgeübt, wenn zur Entnahme des Füllgutes Quetschdruck von außen auf den Hauptkörper 14 ausgeübt wird. Auch dann, wenn der Hauptkörper 14 in zusammengequetschtem Zustand verbleibt, baut sich der Öffnungsdruck auf die Ventilschlitze 4 wieder ab, sobald hinreichende Menge an Füllgut durch die Ventilschlitze 4 zur Entnahme von Füllgut aus der Entnahmeöffnung 22 in die Vorratskammer 24 übergetreten ist. Die Ventilschlitze 4 wirken somit als vorzugsweise ganz oder doch jedenfalls merklich sich selbst in die Schließstellung rückstellendes Rückschlagventil.

Bei allen dargestellten Ausführungsformen sind dabei die Ventilschlitze 4 innerhalb eines zentralen elastisch-nachgiebigen Membranbereiches 3 der Zwischenwand 1 ausgebildet. Bei relativ weichem Membranabschnitt 3 kann der einzelne Schlitz relativ kurz, bei relativ hartem Membranabschnitt 3 soll er etwas länger sein. Die Schlitzlänge hängt auch davon ab, ob das fluide Füllgut dünn- oder dickflüssig ist. Bei wie Wasser dünnflüssigem Füllgut kommt man mit Schlitzlängen von 2 bis 3 mm aus; bei dickflüssigerem Füllgut werden zweckmäßig längere Ventilschlitze gewählt. Wie noch weiter dargelegt wird, soll dabei die Schlitzführung und sonstige Schlitzanordnung so gewählt werden, daß ein klappenartiges Öffnen eines Randbereiches des Ventilschlitzes, oder beider Randbereiche, möglichst vermieden wird. Aus ähnlichen Überlegungen sollte auch allgemein die Länge des Ventilschlitzes nicht zu groß werden. Wenn man dann z. B. den Ventilschlitz längs einer stark gekrümmten oder langen schwächer gekrümmten Kurve verlaufen läßt, ist eine Klappenfunktion des den inneren Schlitzrand bildenden Membranbereiches praktisch kaum zu vermeiden.

Diese Überlegungen bezüglich der Ventilschlitze schließen jedoch nicht aus, daß die Zwischenwand noch mit anderen bekannten Ausbildungen einer Ventilöffnung, oder mehreren derselben, versehen ist.

Die gesamte Zwischenwand 1 ist zweckmäßig aus demselben Kunststoff einstückig hergestellt. Einzelne radial aufeinander folgende Abschnitte weisen dabei so unterschiedliche Materialstärken und/oder Formgebungen auf, daß sie in unterschiedlichem Maße elastisch-nachgiebig sind.

Die radial innerste Zone bildet dabei der Membranabschnitt 3, der wenigstens im wesentlichen und möglichst ganz spannungslos von einer ihn am äußeren Umfang umgebenden Fassung 2 aufgespannt ist. Der äußere Umfang des Membranabschnittes 3 ist dabei zweckmäßig kreisförmig, kann aber auch, z. B. bei abgeflachten Hauptkörpern 14, eine andere Umrißlinie bilden, z. B. mit Abflachung wie der Hauptkörper oder auch in anderer Gestalt als der Hauptkörper nach durch die Aufspannung bestimmten Überlegungen. Im Grenzfall braucht die Einfassung auch nicht gänzlich um den Membranabschnitt herum zu verlaufen.

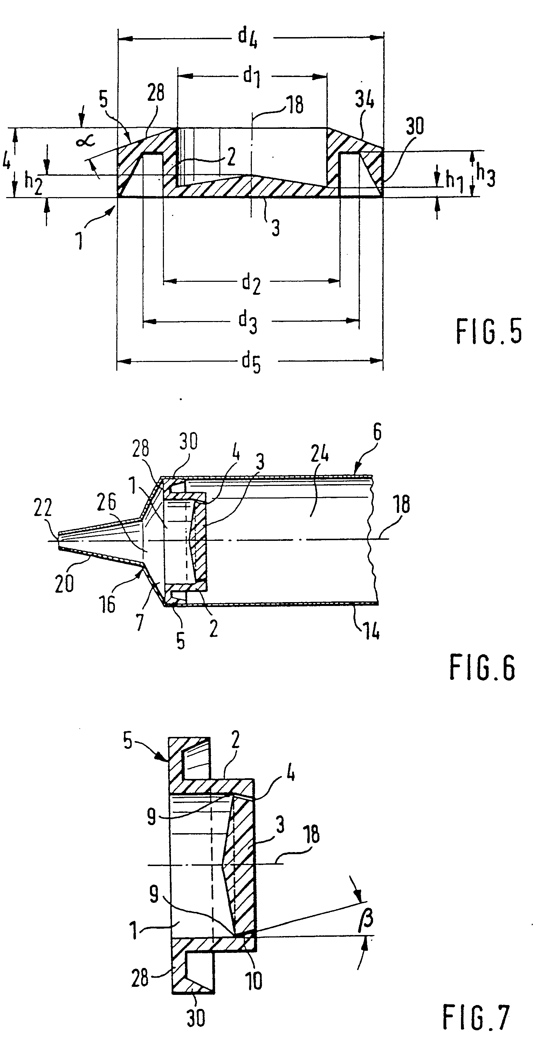

Im Falle aller Ausführungsbeispiele ist die Fassung 2 als mit der Achse 18 koaxialer Zylinder gebildet, an dessen der Vorratskammer 24 zugewandten Stirnseite der Membranabschnitt 3 aufgespannt ist. Wie man an den Darstellungen und insbesondere an Fig. 5 erkennt, braucht dabei die Wandstärke des Zylinders 2 gar nicht größer als die des Membranabschnittes 3 zu sein, da die Zylinderform der Fassung zusätzliche Formsteife verleiht.

Das dem Membranabschnitt 3 abgewandte vordere Stirnende des Zylinders 2 ragt bis in die stirnseitige vordere Querschnittsfläche des Hauptkörpers 14. Von dort erstreckt sich radial nach außen ein als Halteteil dienender Ringkragen 5. Dieser Ringkragen 5 ist so weit in radialer Richtung elastisch-nachgiebig, daß er auch bei Toleranzen des vom Halteteil eingenommenen Innenquerschnittsbereich der Tube 6 sich stets elastisch-nachgiebig an die Behälterinnenwand, hier des Hauptkörpers 14, andrücken kann. Zugleich vermag diese elastische Nachgiebigkeit in radialer Richtung auch Durchmessertoleranzen des die Zwischenwand 1 bildenden Einsatzkörpers selbst auszugleichen. Die Abdichtung erfolgt daher auch bei relativ großen Toleranzen stets unter hinreichend abdichtendem Reibungsfluß zwischen Halteteil und Behälterinnenwand.

Der Zylinder 2 hat zweckmäßig einen Außendurchmesser, der etwa Dreiviertel des Durchmessers des Hauptkörpers 14 ausmacht. Die restliche radiale Erstreckung der Zwischenwand wird von dem Halteteil 5 eingenommen. Wie mehr im einzelnen aus Fig. 5 hervorgeht, ist zweckmäßig auch die axiale Länge des Zylinders 2 etwa gleich der radialen Erstreckung des Halteteils 5. Der jeweilige Ventilschlitz 4 verläuft bei allen dargestellten Ausführungsformen als mit der Achse 18 koaxialer Kreisbogen parallel zur Mantelfläche des Zylinders 2 im Nachbarschaftsbereich von dessen Innenfläche. Dadurch verläuft auch jeder dargestellte Ventilschlitz 4 streng senkrecht zu den Radien r des jeweiligen Membranabschnitts 3 bzw. der ganzen Zwischenwand 1.

Diese Anordnung des jeweiligen Ventilschlitzes 4 hat zur Folge, daß bei Druckbeaufschlagung der Zwischenwand 1 von seiten der Vorratskammer 24 aus der Rand des Ventilschlitzes 4 auf seiten der Fassung 2 relativ zu dieser ganz oder im wesentlichen ortsfest stehen bleibt, während der mit dem zentralen Bereich des Membranabschnittes 2 verbundene Rand des Ventilschlitzes sich ventilschiebeartig etwas längs der Achse 18 verschiebt, und zwar unter elastisch-nachgiebiger Verformung der Umfangszone des Membranabschnittes in Verlängerung des jeweiligen Ventilschlitzes. Wegen der nur geringen Krümmung des jeweiligen Ventilschlitzes 4 und auch nur dessen relativ geringer Länge kann es dabei nicht zu einer nennenswerten Ausklappung des radial inneren Randbereichs des Ventilschlitzes um die Sehne kommen, welche die beiden Enden des jeweiligen Ventilschlitzes miteinander verbindet. Es versteht sich, daß man in nicht dargestellter Abwandlung ähnliche Effekte beispielsweise auch dann erzielen kann, wenn ein kurzer Ventilschlitz gerade ausgebildet ist und dabei rechtwinklig auf dem seine Länge halbierenden Mittelradius des Membranabschnittes steht. Weitere äquivalente Konfigurationen sind denkbar, beispielsweise mit geradem Ventilschlitz und in dessen Bereich paralleler gerader Ausbildung der Fassung 2.

Der den Halteteil bildende Ringkragen 5 weist allgemein eine Ringscheibe 28 auf, die von der der Vorkammer 26 zugewandten Stirnseite des Zylinders 2 ausgeht und an ihrem radialen Außenrand in einen sich längs des Zylinders 2 rückerstreckenden Halteflansch 30 übergeht.

Der Membranabschnitt 3 verläuft auch bei allen Ausführungsbeispielen so, daß seine der Vorratskammer 24 zugewandte Stirnfläche im unbelasteten Zustand eben in der hinteren Stirnfläche des Zylinders 2 verläuft. Die der Vorkammer 26 zugewandte Stirnseite des Membranabschnitts 3 ist zu dessen Zentrum hin verstärkt ausgebildet.

Während die bisher erörterten Merkmale allen dargestellten Ausführungsbeispielen gemeinsam sind, unterscheiden sich diese in folgendem:

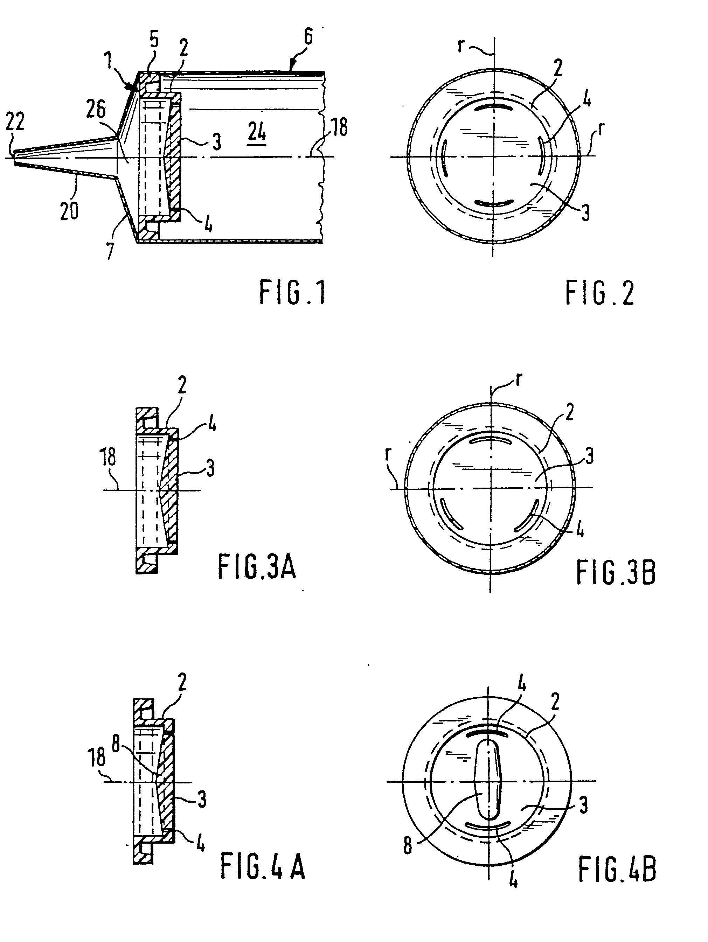

Bei den dargestellten Ausführungsbeispielen verläuft zwar die Verstärkungskontur jeweils längs eines flachen Konus, welcher den zentralen Punkt des Membranabschnittes 3 im Verhältnis zu dessen Randabschnitt um etwa das Zwei- bis Dreifache, vorzugsweise etwa 1,5-fache, verstärkt. Diese Verstärkung kann dabei jedoch entweder gemäß Fig. 3A winkelinvariant oder gemäß den Fig. 4A und 4B nur an einer oder mehreren Verstärkungs- oder Versteifungsrippe(n) 8 ausgebildet sein. Im Falle der Anordnung einer solchen Rippe 8 ist es zweckmäßig, daß diese sich von der Achse 18 aus zum jeweiligen Ventilschlitz 4 hin erstreckt und dabei symmetrisch zu dessen Mittelradius angeordnet ist. Bei zwei diametral gegenüberliegenden Ventilschlitzen 4 gemäß Fig. 4B bilden dann die beiden Rippen 8 eine gemeinsame längs eines Durchmessers des Membranabschnittes 3 verlaufende Rippe.

Die Verstärkung kann dabei bereits an der Innenfläche des Zylinders 2 beginnen, wie dies die Fig. 3A und 4A zeigen; sie kann aber auch erst radial weiter innen beginnen, und zwar u.U. erst mit etwas radialem Absrand radial weiter innen als der jeweilige Ventilschlitz 4, wie dies die in Fig. 4B dargestellte Modifikation zeigt. Zweckmäßig ist dabei die Vermeidung scharfer Kanten oder Ecken im Begrenzungsbereich der Rippen, so daß eine längs des Radius langgestreckte oval begrenzte Rippenausbildung gemäß Fig. 4B zweckmäßig ist.

Es können zwei (Fig. 4B), drei (Fig. 3B) oder vier (Fig. 2) Ventilschlitze 4 vorgesehen sein, die zweckmäßig gemäß den genannten Ausführungsbeispielen in gleichmäßigen Abständen über den Umfang des Membranabschnittes 3 verteilt sind. Auch eine größere Anzahl von Ventilschlitzen ist möglich; je mehr Ventilschlitze angeordnet sind, um so koaxialer mit der Achse 18 bewegt sich der zentrale Bereich des Membranabschnitts 3, welcher den jeweiligen Innenrand der Ventilschlitze 4 bildet, bei Druckbeaufschlagung von seiten der Vorratskammer 24 her nach Art eines Ventilschiebers relativ zu dem jeweiligen radial äußeren Rand des Ventilschlitzes. Andererseits hängt die Zahl der zweckmäßig zu verwendenden Ventilschlitze 4 von dem Maß der gewünschten Rückstellkraft ab, welche in dem zu den Ventilschlitzen 4 komplementären Umfangsbereich des Membranabschnitts von dessen Material ausgeübt wird.

Bei den Ausführungsformen der Fig. 1 bis 5 hat der jeweilige Ventilschlitz 4 noch einen geringen radialen Abstand relativ zur Innenfläche des Zylinders 2. Dieser Abstand ist klein, vorzugsweise sehr klein, im Verhältnis zum Radius des Membranabschnitts 3. Wie dargestellt, kann dabei dieser Abstand etwa um eine Größenordnung kleiner als der Radius des Membranabschnittes 3 sein. realistische Werte sind das etwa 0,1- bis 0,2-fache, beispielsweise, wie dargestellt, das 0,15-fache. Vorzugsweise fällt jedoch gemäß Fig. 6 und 7 der Ventilschlitz 4 sogar ganz oder im wesentlichen mit der Innenfläche des Zylinders 2 zusammen. Dies ist in den Fig. 6 und 7 an Ausführungsbeispielen etwa gemäß Fig. 2 oder Fig. 4B illustriert, bei denen jeweils ein Paar von Ventilschlitzen 4 sich diametral gegenüberliegt. Zusätzlich ist noch die besonders vorteilhafte Besonderheit gezeigt, daß die Schnittflächen 10 der Ventilschlitze 4 einen geraden Neigungswinkel ß zeigen, derart, daß die Schnittfläche 10 an ihrem der Vorkammer 26 zugewandten Ende mit dem Innenrand bzw. der inneren Mantelfläche des Zylinders 2 zusammenfällt und sich in Richtung zur Vorratskammer 24 hin konisch auf die Achse 18 zu erstreckt. Es versteht sich auch, daß diese schräge Schlitzführung nicht auf diametral gegenüberliegende Ventilschlitze 4 beschränkt ist.

In Fig. 7 ist der Neigungswinkel ß relativ zur Innenfläche des Zylinders 2 gemessen. Verlängert man die Schnittfläche 10 in Richtung zur Vor-

15

ratskammer so weit, daß ein Schnitt mit der Achse 18 erfolgt, so ist dort der Schnittwinkel 90°-β. β selbst ist ein spitzer Winkel von zweckmäßig mehr als 10° und weniger als 40°, vorzugsweise etwa 30°.

Das Halteteil 5 weist bei allen dargestellten Ausführungsformen mit Ausnahme der von Fig. 5 eine Ringscheibe 28 auf, die in der der Vorkammer 26 zugewandten stirnseitigen Querschnittsfläche des Zylinders 2 und damit eben verläuft. Der sich von der Schulter 6 weg erstreckende Halteflansch 30, der mit seiner äußeren Mantelfläche an der Innenfläche des Hauptkörpers 14 reibschlüssig anliegt, hat etwa die halbe axiale Länge wie der Zylinder 2, mindestens eine solche Länge, die eine zuverlässige Halterung und Dichtung ergibt. Der Halteflansch 30 kann dabei ungefähr dreieckigen spitzen (Fig. 7, 9 und 10) oder stumpfen (Fig. 1, 3A und 4A) Querschnitt haben, wobei die Basis des Dreiecks dem Zylinder 2 zugewandt ist, eine Dreieckseite an der Innenwand des Behälters anliegt und die andere Dreieckseite mit der der Schulter 7 zugewandten Seite der Ringscheibe 28 zusammenfällt.

Eine andere Ausbildung des Halteteils 5 zeigt Fig. 5. Bei dieser Ausführungsform ist die der Behälterschulter 7 zugewandte Seite der Ringscheibe unter dem Winkel α abgeschrägt, so daß die ganze Seite des die Zwischenwand 1 bildenden Einsatzteils zur satten Anlage an der entsprechend geneigten Behälterschulter 7 kommen kann. Da die der Vorratskammer 24 zugewandte Seite der Ringscheibe 28 weiterhin radial verläuft, ergibt sich an der Ansatzstelle des Halteflansches 30 eine Ringzone 34 schmalster Stärke, von der aus der wiederum spitz dreieckförmig gebildete Halteflansch 30 ausgeht. Hierdurch kann man besonders gut die toleranzenausgleichende Elastizität des Halteteils 5 unter gleichzeitiger sicherer Anlage des Einsatzteils an der Behälterschulter gewinnen.

In Fig. 5 sind einige charakteristische Maße eines solchen die Zwischenwand 1 bildenden Einsatzteils angegeben:

- Innendurchmesser $d_1$ des Zylinders 2 = 19,5 mm;
- Außendurchmesser $d_2$ des Zylinders 2 = 20,5 mm;
- Durchmesser $d_3$ der Ringzone 34 = 22,0 mm;
- Außendurchmesser $d_4$ der Ringscheibe 28 = 24,5 mm;
- Außendurchmesser $d_5$ der zur Vorratskammer 24 weisenden Kante des Halteflansches 30 = 24,8 $\pm^{0,1}_{0}$ mm;
- Stärke h 1 des Membranabschnittes 3 in seinem schwächsten Bereich = 0,4 mm;
- Stärke h 2 des Membranabschnittes 3 in seinem stärksten Bereich = 1,0 mm;
- Höhe h 3 der mit der Innenfläche des Hauptkörpers 14 in reibschlüssigem Eingriff stehenden äußeren Mantelfläche des Halteflansches 30 = 3,0 mm;
- Höhe h 4 des Zylinders 2 zwischen seinen beiden Stirnflächen = 4,7 mm;

16

- Schrägungswinkel α der der Behälterschulter 7 zugewandten Seite der Ringscheibe 28 entsprechend der Schrägung der Behälterschulter 7 selbst = 27°.

Der in Fig. 5 dargestellte Einsatzteil ist das noch nicht geschlitzte Rohteil, zweckmäßig aus Weich-Polypropylen. An den leicht unterschiedlichen Maßen $d_4$ und $d_5$ in Verbindung mit der elastisch-nachgiebigen Materialeigenschaft erkennt man den toleranzausgleichenden Effekt des Halteteils 5 ohne Beeinträchtigung der konstant vorgegebenen Einspannbedingungen des Membranabschnittes 3 in der vom Zylinder 2 gebildeten Fassung.

Man erkennt ferner, daß die innere Übergangsfläche der Ringscheibe 28 in den Halteflansch 30 unter Bildung der ringförmigen geschwächten Zone 34 auf der der Vorratskammer 24 zugewandten Seite von radial innen nach radial außen geknickt verläuft. Der Halteflansch erstreckt sich hierbei bis in die der Vorratskammer 24 zugewandte Ebene des Membranabschnitts 3.

## Patentansprüche

1. Auslaufsperre für Behälter (6), insbesondere für Tuben, mit einer den Behälterraum unterteilenden, an einem einstückigen Einsatzteil des Behälters (6) ausgebildeten Zwischenwand (1), die eine mit einer Entnahmeöffnung (22) des Behälters (6) kommunizierende Vorkammer (26) von einer Vorratskammer (24) abteilt, in der das Füllgut abwechselnd zur Entnahme druckbelastbar und danach wieder druckentlastbar ist, wobei die Zwischenwand einen Membranabschnitt (3) mit mindestens einer von Schlitzen gebildeten Ventilöffnung (4) bildet, die sich bei Druckbeaufschlagung des Membranabschnitts von seiten der Vorratskammer gegen eine von der Membranspannung ausgeübte Rückstellkraft öffnet und sich bei Druckentlastung unter der Rückstellkraft selbsttätig wieder schließt, wobei die Zwischenwand einen Halteteil (5) bildet, der unter Ausgleich von Toleranzen mit dem Behälter verbunden oder verbindbar ist, und wobei die Zwischenwand (1) eine relativ zu ihrem Membranabschnitt (3) formsteife Fassung (2) ihres Membranabschnitts (3) bildet, welche den Membranabschnitt (3) aufspannt und vom Halteteil (5) getragen ist, *dadurch gekennzeichnet*, daß mehrere periphere Ventilschlitze (4) längs der Fassung (2) verlaufen, und daß der Membranabschnitt (3) zu seinem Zentrum hin verstärkt ausgebildet ist.

2. Auslaufsperre nach Anspruch 1, dadurch gekennzeichnet, daß die Fassung (2) ringförmig ausgebildet ist.

3. Auslaufsperre nach Anspruch 2, dadurch gekennzeichnet, daß die Fassung als Zylinder (2) ausgebildet ist.

**17**

4. Auslaufsperre nach einem der Ansprüche 1 bis 3, dadurch gekennzeichnet, daß der Membranabschnitt (3) an einer Stirnseite der langgestreckt ausgebildeten Fassung (2) angeordnet ist.

5. Auslaufsperre nach Anspruch 4 mit Anordnung der Zwischenwand (1) an einer Behälterschulter (7), dadurch gekennzeichnet, daß die mit dem Membranabschnitt (3) versehene Stirnseite der Fassung (2) der Behälterschulter (7) abgewandt ist.

6. Auslaufsperre nach einem der Ansprüche 1 bis 5, dadurch gekennzeichnet, daß der Halteteil (5) als Ringkragen ausgebildet ist.

7. Auslaufsperre nach Anspruch 6, dadurch gekennzeichnet, daß der Ringkragen (5) eine Ringscheibe (28) mit einem abgewinkelten Halteflansch (30) aufweist.

8. Auslaufsperre nach Anspruch 7, dadurch gekennzeichnet, daß die der Vorkammer (26) zugewandte Fläche der Ringscheibe (28) in Anpassung an eine schräge Behälterschulter (7) schräg ausgebildet ist.

9. Auslaufsperre nach Anspruch 7 oder 8, dadurch gekennzeichnet, daß der Halteflansch (30) von einer Behälterschulter (7) fortweist.

10. Auslaufsperre nach einem der Ansprüche 7 bis 9, dadurch gekennzeichnet, daß die innere Übergangsfläche der Ringscheibe (28) in den Haltenflansch (30) unter Bildung einer ringförmigen geschwächten Zone (34) von radial innen nach radial außen geknickt verläuft.

11. Auslaufsperre nach einem der Ansprüche 1 bis 10, dadurch gekennzeichnet, daß der jeweilige Ventilschlitz (4) rechtwinklig zum Radius (r) des Membranabschnittes (3) verläuft.

12. Auslaufsperre nach einem der Ansprüche 1 bis 11, dadurch gekennzeichnet, daß die Verstärkung des Membranabschnitts (3) durch mindestens eine Versteifungsrippe (8) gebildet ist.

13. Auslaufsperre nach Anspruch 12, dadurch gekennzeichnet, daß der Membranabschnitt (3) jeweils eine gegen den Ventilschlitz (4) auslaufende Versteifungsrippe (8) bildet.

14. Auslaufsperre nach Anspruch 12 oder 13, dadurch gekennzeichnet, daß die Versteifungsrippe(n)(8) radial verläuft bzw. verlaufen.

15. Auslaufsperre nach einem der Ansprüche 1 bis 14, dadurch gekennzeichnet, daß die Versteifungsrippe(n) (8) und/oder die Verstärkung auf der der Vorratskammer abgewandten Seite des Membranabschnittes (3) ausgebildet ist bzw. sind.

16. Auslaufsperre nach einem der Ansprüche 1

**18**

bis 15, dadurch gekennzeichnet, daß der Außenrand des Ventilschlitzes oder der Ventilschlitze (4) am Innenrand (9) der Fassung (2) angeordnet ist.

17. Auslaufsperre nach einem der Ansprüche 1 bis 16, dadurch gekennzeichnet, daß die Schnittfläche (10) des Ventilschlitzes oder der Ventilschlitze (4) schräg (Neigungswinkel 90°-β) zur Achse (18) der Fassung (2) verläuft.

18. Auslaufsperre nach Anspruch 17, dadurch gekennzeichnet, daß der jeweilige Ventilschlitz (4) an der der Vorkammer (26) zugewandten Seite des Membranabschnittes (3) achsferner als an der der Vorratskammer (24) zugewandten Seite des Membranabschnittes (3) angeordnet ist.

19. Anwendung einer Auslaufsperre nach einem der Ansprüche 1 bis 18 für Klebstoffbehälter.

20. Anwendung einer Auslaufsperre nach einem der Ansprüche 1 bis 18 für Shampoonbehälter.

21. Anwendung einer Auslaufsperre nach einem der Ansprüche 1 bis 18 für Zahncremebehälter.

**Claims**

1. A discharge barrier for containers (6), in particular for tubes, having a dividing wall (1) subdividing the container space formed on a one-piece insert of the container (6), which dividing wall divides an outer chamber (26) communicating with a dispensing opening (22) of the container (6) from a storage chamber (24) in which the contents can alternately be subjected to pressure for dispensing and be thereafter relieved of pressure again,

wherein the dividing wall forms a membrane section (3) having at least one valve opening (4) formed by slots, which valve opening, when the membrane section is subjected to pressure from the storage chamber, opens against a restoring force exerted by the tension of the membrane and when pressure is relieved closes again automatically under the restoring force, wherein the dividing wall forms a holding element (5) which is or can be connected to the container in a manner compensating for tolerances, and wherein the dividing wall (1) forms a mounting (2) of its membrane section (3) which is dimensionally stable relative to its membrane section (3), the mounting gripping the membrane section (3) and being carried by the holding element (5), characterized in that several peripheral valve slits (4) run along the mounting (2) and the membrane section (3) is of reinforced construction towards its centre.

2. A discharge barrier according to claim 1, characterized in that the mounting (2) is of ring-shaped construction.

EP 0 128 525 B1

19

3. A discharge barrier according to claim 2, characterized in that the mounting is constructed as a cylinder (2).

4. A discharge barrier according to one of claims 1 to 3, characterized in that the membrane section (3) is arranged on an end face of the mounting (2) of elongate construction.

5. A discharge barrier according to claim 4, with arrangement of the dividing wall (1) at a container shoulder (7), characterized in that the end face of the mounting (2) provided with the membrane section (3) is remote from the container shoulder (7).

6. A discharge barrier according to one of claims 1 to 5, characterized in that the holding element (5) is constructed as an annular collar.

7. A discharge barrier according to claim 6, characterized in that the annular collar (5) has an annular disc (28) with an angled holding flange (30).

8. A discharge barrier according to claim 7, characterized in that the face of the annular disc (28) facing the outer chamber (26) is of inclined construction to match an inclined container shoulder (7).

9. A discharge barrier according to claim 7 or 8, characterized in that the holding flange (30) points away from a container shoulder (7).

10. A discharge barrier according to one of claims 7 to 9, characterized in that the inner transition surface between the annular disc (28) and the holding flange (30) extends at an angle from radially inwards to radially outwards to form a ring-shaped weakened zone (34).

11. A discharge barrier according to one of claims 1 to 10, characterized in that the respective valve slit (4) extends at right angles to the radius (r) of the membrane section (3).

12. A discharge barrier according to one of claims 1 to 11, characterized in that the reinforcement of the membrane section (3) is formed by at least one reinforcing rib (8).

13. A discharge barrier according to claim 12, characterized in that the membrane section (3) forms in each case a reinforcing rib (8) running out towards the valve slit (4).

14. A discharge barrier according to claim 12 or 13, characterized in that the reinforcing rib(s) (8) runs (run) radially.

15. A discharge barrier according to one of claims 1 to 14, characterized in that the reinforcing rib(s) (8) and/or the reinforcement is (are)

20

formed on the side of the membrane section (3) remote from the storage chamber.

16. A discharge barrier according to one of claims 1 to 15, characterized in that the outer edge of the valve slit (4) or of the valve slits (4) is arranged at the inner edge (9) of the mounting (2).

17. A discharge barrier according to one of claims 1 to 16, characterized in that the section plane (10) of the valve slit or of the valve slits (4) is inclined (angle of inclination 90° -β) to the axis (18) of the mounting (2).

18. A discharge barrier according to claim 17, characterized in that the respective valve slit (4) is further from the axis at the side of the membrane section (3) facing the outer chamber (26) than at the side of the membrane section (3) facing the storage chamber (26).

19. Application of a discharge barrier according to one of claims 1 to 18 for adhesive containers.

20. Application of a discharge barrier according to one of claims 1 to 18 for shampoo containers.

21. Application of a discharge barrier according to one of claims 1 to 18 for toothpaste containers.

**Revendications**

1. Fermeture à dispositif d'arrêt d'écoulement pour récipients (6), en particulier pour tubes, comportant une paroi intermédiaire (1) qui divise le volume du récipient (6) et qui est formée sur une garniture d'insertion, réalisée d'une seule pièce, dudit récipient, ladite paroi séparant un compartiment avant (26), communiquant avec un orifice de prélèvement (22) du récipient (6), d'une chambre d'alimentation ou réservoir (24) dans laquelle la matière de remplissage peut être alternativement chargée en pression pour le prélèvement, puis exposée au relâchement de pression, la paroi intermédiaire étant conformée en tant que section formant membrane (3) pourvue d'au moins une ouverture (4) de valve qui est constituée par des fentes et qui s'ouvre sous sollicitation de pression par la section de membrane initiée du côté du réservoir en s'opposant à une force de rappel exercée par la tension de la membrane et se referme automatiquement, lorsque la pression est relâchée, sous l'action de la force de rappel, la paroi intermédiaire étant formée avec une pièce de serrage (5) qui est raccordée ou peut être raccordée au récipient avec compensation des tolérances, et la paroi intermédiaire (1) étant formée avec une monture ou douille de sertissage (2) de sa section de membrane (3), ayant une stabilité de forme propre par rapport a la section de membrane (3) de ladite paroi, ladite monture ayant pour effet de tendre la section de membrane (3) et étant supportée par la pièce de serrage (5), caractérisée en ce que plusieurs fentes de valve (4) s'étendent le long de la monture (2) et en ce que la section de membrane (3) est conformée de manière à aller en se renforçant en direction de son centre.

2. Fermeture selon la revendication 1, caractérisée en ce que la monture (2) a une configuration annulaire.

3. Fermeture selon la revendication 2, caractérisée en ce que la monture est conformée en tant que cylindre (2).

4. Fermeture selon l'une des revendications 1 à 3, caractérisée en ce que la section de membrane (3) est disposée sur un côté frontal de la monture (2) de configuration allongée.

5. Fermeture selon la revendication 4, à disposition de la paroi intermédiaire (1) sur un épaulement (7) du récipient, caractérisée ce que le côté frontal de la monture (2) pourvu de la section de membrane (3) est éloignée de l'épaulement (7) du récipient.

6. Fermeture selon l'une des revendications 1 à 5, caractérisée en ce que la pièce de serrage (5) est conformée en tant que collet annulaire.

7. Fermeture selon la revendication 6, caractérisée en ce que le collet annulaire (5) présente une bride de retenue (30) repliée en équerre.

8. Fermeture selon la revendication 7, caractérisée en ce que la face du disque annulaire (28) tournée vers le compartiment avant (26) est conformée obliquement de manière à s'adapter contre un épaulement (7) oblique du récipient.

9. Fermeture selon la revendication 7 ou 8, caractérisée en ce que la bride de retenue (30) va en s'éloignant à partir d'un épaulement (7) du récipient.

10. Fermeture salon l'une des revendications 7 à 9, caractérisée en ce que la face intérieure de transition du disque annulaire (28) s'étend suivant un coude allant de radialement vers l'intérieur à radialement vers l'extérieur, avec formation d'une zone (34) affaiblie de forme annulaire.

11. Fermeture selon l'une des revendications 1 à 10, caractérisée en ce que chaque fente de valve (4) s'étend perpendiculairement au rayon (r) de la section de membrane (3).

12. Fermeture selon l'une des revendications 1 à 11, caractérisée en ce que le renforcement de la section de membrane (3) est formé par au moins une nervure de raidissement (8).

13. Fermeture selon la revendication 12, caractérisée en ce que la section de membrane (3) forme chaque fois une nervure de raidissement (8) se terminant respectivement en direction de la fente de valve (4).

14. Fermeture selon la revendication 12 ou 13, caractérisée en ce que la ou les nervures de raidissement (8) s'étendent radialement.

15. Fermeture selon lune des revendications 1 à 14, caractérisée en ce que la ou les nervures de raidissement (8) et/ou le renforcement sont respectivement formés du côté de la section de membrane (3) opposé au réservoir.

16. Fermeture selon l'une des revendications 1 à 15, caractérisée en ce que le bord extérieur de la fente de valve ou des fentes de valve (4) est disposé dur la bord intérieur (9) de la monture (2).

17. Fermeture selon l'une des revendications 1 à 16, caractérisée en ce que la surface de découpe (10) de la fente de valve ou des fentes de valve (4) s'étend obliquement (angle d'inclinaison β égal à 90°) par rapport l'axe (18) de la monture (2).

18. Fermeture selon la revendication 17, caractérisée en ce que la fente de valve (4) respective est disposée sur le côté de la section de membrane (3) tourné vers le compartiment avant (26) plus près de l'axe que sur le côté de la section de membrane (3) tourné vers le réservoir (24).

19. Utilisation d'une fermeture selon l'une des revendications 1 à 18, pour des récipients de colle.

20. Utilisation d'une fermeture selon l'une des revendications 1 à 18, pour des récipients de shampoings.

21. Utilisations d'une fermeture selon l'une des revendications 1 à 18, pour des récipients de dentifrices.

FIG.1

FIG.2

FIG.3A

FIG.3B

FIG.4 A

FIG.4B

FIG.5

FIG.6

FIG.7